# EUROPEAN PATENT APPLICATION

(11) **EP 1 983 414 A1**
(43) Date of publication of application: **22.10.2008**
(21) Application number: 07106483.6
(22) Date of filing: 19.04.2007
(51) Int. Cl.: G06F 3/048

(54) **Multiple display window handling**

(71) Applicant: Research In Motion Limited, Waterloo, Ontario N2L 3W8 (CA)
(72) Inventor: Wormald, Chris, Kitchener Ontario N2K 4J2 (CA)
(74) Representative: Rickard, David John

(57) **Abstract**

Display windows associated with one or more software applications are differentiated with a pictograph drawn in each window. The user can then quickly and easily distinguish between windows of the same application or between applications by referring to the pictograph, rather than having to read small text and graphics located in the title bar of the windows. A pictograph may be a watermark which is visible through any overlying text or graphics in the window.

## Description

This invention relates generally to displaying software applications running on a computing device.

An application running on a computing device may have multiple display windows. For example, a word processing application may have multiple display windows where each window displays a different file. Also, each software application running on a computing device typically executes in its own display window. Therefore it is not uncommon for a person to have multiple display windows opened simultaneously on a computing device.

In order to allow for multiple display windows to fit on a display (such as a computer monitor or a screen on a portable device) display windows are typically scalable from a fully maximized state (e.g. occupying the entirety of the display area) to a minimized state (e.g. occupying some small percentage of the total available display area). Moreover, display windows may be tiled one next to another or stacked one on top of another. When multiple display windows are open certain windows may be partially occluded by overlying display windows.

A display window is typically uniquely identified using alphanumeric text located on a title bar of the window. This title bar may appear at the top or bottom of the window. For example, in the case of a word processing application, the name of the file that the user is working on may appear in the title bar. The title bar may also contain a graphic, for example, if the application is a word processing program, the graphic may be an icon representative of the word processing program. Alternatively, in the case of a display window displaying files in a directory on a computer, the title bar may contain alphanumeric text showing the path of the directory.

Unfortunately, graphics and alphanumeric text located on the title bar tend to be very small and the text may be lengthy. This poses at least two problems for the user.

First, in order to distinguish between similar display windows of an application, such as two instances of a word processing program, a user may need to properly distinguish between multiple and lengthy texts on the title bars of the windows.

Second, as discussed above, when multiple display windows are open, overlying display windows may occlude underlying windows. Thus, the title bars of underlying windows may be completely or partially occluded. If the user cannot see the title bar or cannot see enough of the title bar to sufficiently identify a window he must move overlying windows out of the way.

A further problem is that graphics and alphanumeric text used to identify display windows may be unintuitive, thus challenging less sophisticated users. For instance, the title of a window displaying files on a memory device (for example, a digital camera) may be entitled "E:" while the title of a window displaying files on another device (for example, a personal digital assistant) may be "J:". If a user wishes to drag files from one device to the other, the user must remember that an application title beginning with "E:" represents the digital camera while "J:" represents the personal digital assistant.

Based on the foregoing, it may be appreciated that there is a need for an improved method of differentiating between multiple display windows.

### DESCRIPTION OF THE DRAWINGS

**FIG. 1** is a schematic view of a computing system in which example embodiments described herein may be used.

**FIG. 2** is a screenshot of a display window configured in a known manner.

**FIG. 3** is a screenshot of another display window configured in a known manner.

**FIG. 4** is a screenshot of two display windows configured in a known manner.

**FIG. 5** is a screenshot of an example application operating in accordance with the present disclosure.

**FIG. 6** is a screenshot of an example display window configured in accordance with the present disclosure.

**FIG. 6a** is a screenshot of the display window of **FIG. 6** sharing a display with another display window. The second window has a pictograph representative of the second application.

**FIG. 7** is a screenshot of an example display window configured in accordance with the present disclosure with a pictograph associated with a device.

**FIG. 7a** is a screenshot of the device display window of **FIG. 7** sharing a display with another device display window. The second device display window has a pictograph representative of the second device.

**FIG. 8** is a flow diagram illustrating a method according to an aspect of the present disclosure.

**FIG. 9** is a flow diagram illustrating a method according to another aspect of the present disclosure.

### BACKGROUND

Display windows associated with one or more software applications are differentiated with a pictograph drawn in each window. The user can then quickly and easily distinguish between windows of the same application or between applications by referring to the pictograph, rather than having to read small text and graphics located in the title bar of the windows. A pictograph may be a watermark which is visible through any overlying text or graphics in the window.

In one aspect, there may be provided a method for facilitating handling of multiple software applications running on a computing device, comprising: presenting a first window on a display for said computing device, said first window having a title bar and a body, said first window displaying at least one of alphanumerics and graphics related to a first software application; presenting a second window on said display, said second window having a title bar and a body, said second window displaying at least one of alphanumerics and graphics related to a second software application; rendering a first pictograph representative of said first software application in said body of said first window; rendering a second pictograph representative of said second software application in said second window, said second pictograph being visually different from said first pictograph; wherein said first pictograph is a watermark which is visible through any overlying alphanumerics and graphics in said first window.

In another aspect, there may be provided a method for facilitating handling of multiple software applications running on a computing device, comprising: presenting a first window on a display for said computing device, said first window displaying at least one of alphanumerics and graphics related to a first software application; presenting a second window on said display, said second window displaying at least one of alphanumerics and graphics related to a second software application; obtaining a first pictograph representative of said first software application from said first software application; obtaining a second pictograph representative of said second software application from said second software application, said second pictograph being visually different from said first pictograph; rendering said first pictograph representative of said first software application in said first window; rendering said second pictograph representative of said second software application in said second window.

Related computing devices are also provided.

Other aspects and features will become apparent to those ordinarily skilled in the art upon review of the following description of example embodiments in conjunction with the accompanying figures.

### DESCRIPTION OF PREFERRED EMBODIMENTS

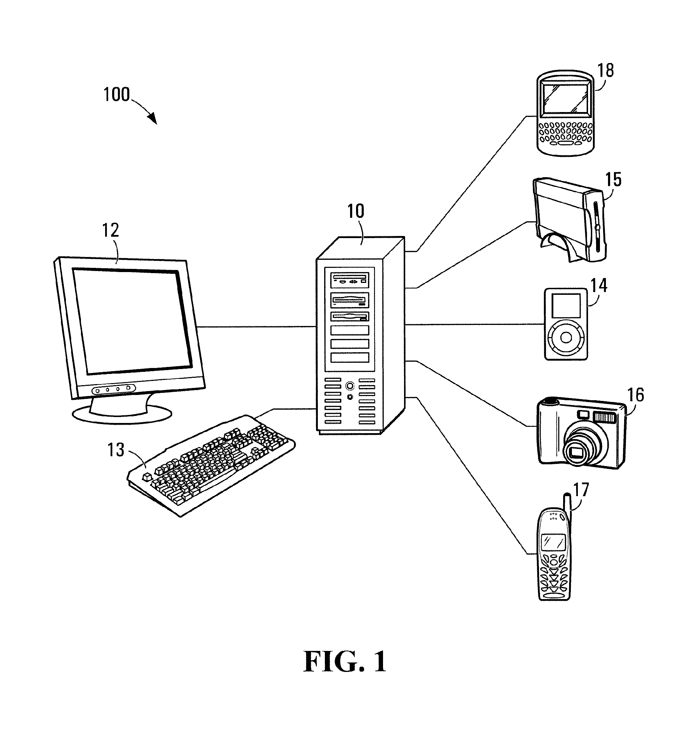

Referring to **FIG. 1****,** a computing system **100** may comprise a computer **10** including a CPU and a memory (not shown), a display **12** such as a monitor and an input device **13** such as a keyboard. Computing system **100** may further include one of a number of portable devices connectable to the computer **10** using standard connections such as Universal Serial Bus (USB), IEEE 1394 (such as FireWire^{™}) or Bluetooth^{™} connections.
**FIG. 1** shows several example devices that may be connected to computer **10:** a personal digital assistant (PDA) **18,** a music player **14,** an external disk drive **15,** a digital camera **16** and a handheld communication device **17.**

Computer **10** may be a PC loaded with an operating system such as Microsoft Windows, Linux, Unix or Mac OS. The operating system loaded on computer **10** may natively support display windows. If not natively supported, add-on components providing display window capabilities may be installed on computer **10.** Computer **10** may be configured to handle multiple applications each having a display window providing a separate user interface. Display windows running on computer **10** are displayed on display **12.** Such applications, for example, a word processing application, may reside in memory on computer **10.**

Portable devices are typically sold with accompanying software that may be loaded on computer **10.** Through this software, users may interact with the portable device to perform functions such as transferring files between computer **10** and the portable device and synchronizing files on the portable device with corresponding files on computer **10** (or vice versa). Alternatively, if no software is provided, the portable device may be connected to the computer **10** and resident software may provide the user interface, as for example by recognizing the device as an additional memory drive.

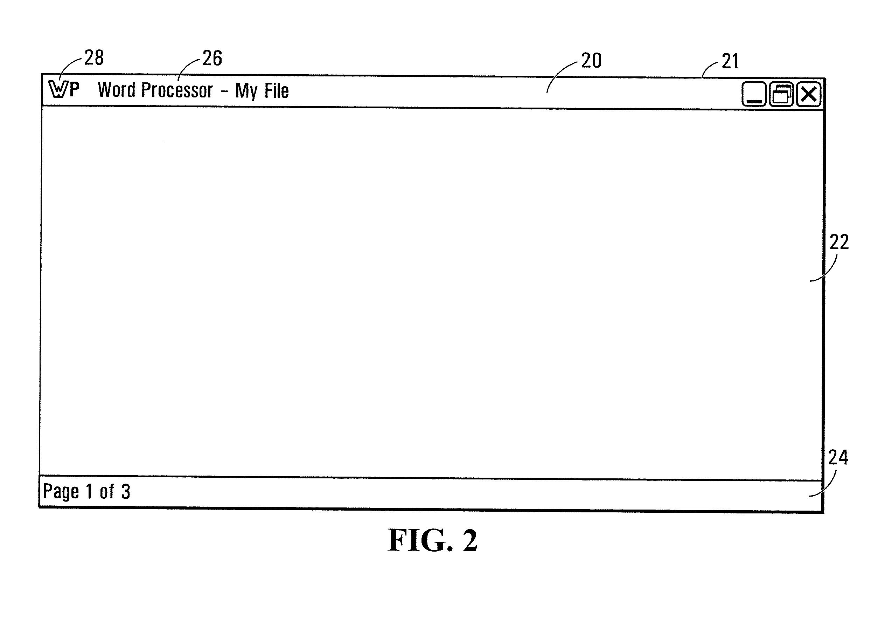

Typically, each application (whether a word processing application or a user interface application for a connected portable device) executes in one or more of its own display windows. **FIG. 2** shows a typical display window **21** where the application is a word processor. Display window **21** has a tile bar **20,** a body **22** and a footer bar **24.** The tile bar **20** may contain an icon **28** representative of the word processing program and text **26** identifying the name of the file that is currently being displayed. Footer bar **24** may contain information such as the current page number. Alternatively, footer bar **24** may contain the file name.

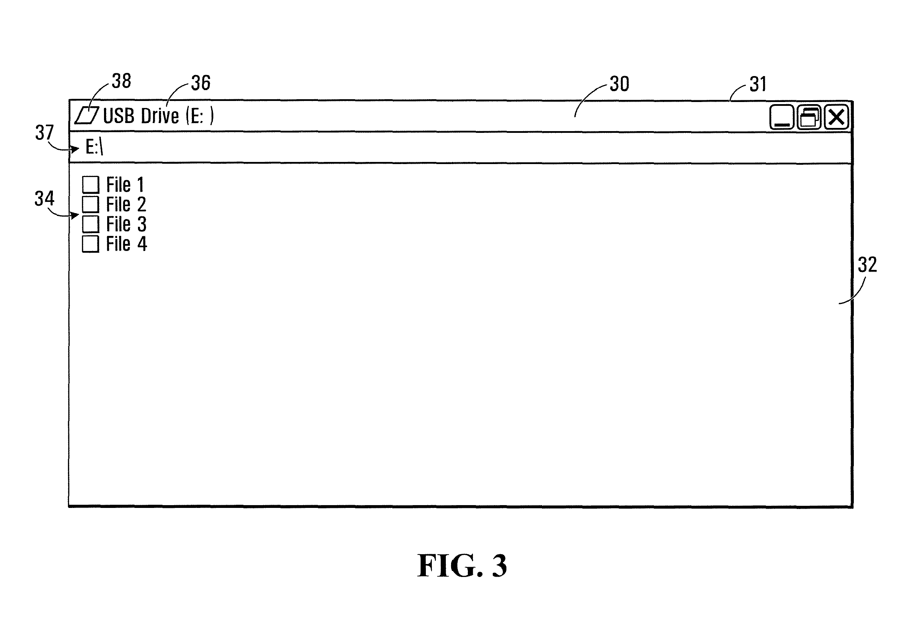

A portable device connectable to computer **10** may either be accessed through its dedicated software, if provided, or may be accessed by resident software on computer **10.** In the first situation, the portable device software is typically similar to any of the other applications running on computer **10.** In the latter case, where no software is provided, the portable device may appear as an additional memory drive. **FIG. 3** illustrates the situation where the portable device is connected as an additional disk drive.

**FIG. 3** shows a window **31** displaying the files located on a portable device-an external USB drive-where the device is connected as an additional disk drive on computer **10.** As will be appreciated, the portable device may be any other portable device containing a memory such as a digital camera, a music player or a PDA. Returning to **FIG. 3****,** the USB drive is connected as drive E: on computer **10,** however, it may be connected and identified in other manners known to persons skilled in the art. Window **31** is similar to the display window **21** in **FIG. 2****.** Window **31** has a title bar **30** containing an icon **38** representative of a disk drive, text **36** describing the name of the portable device and body **32** containing a listing of files **34.** Files **34** reside on the USB drive. In addition, window **31** has an address bar **37** containing the path to files **34.**

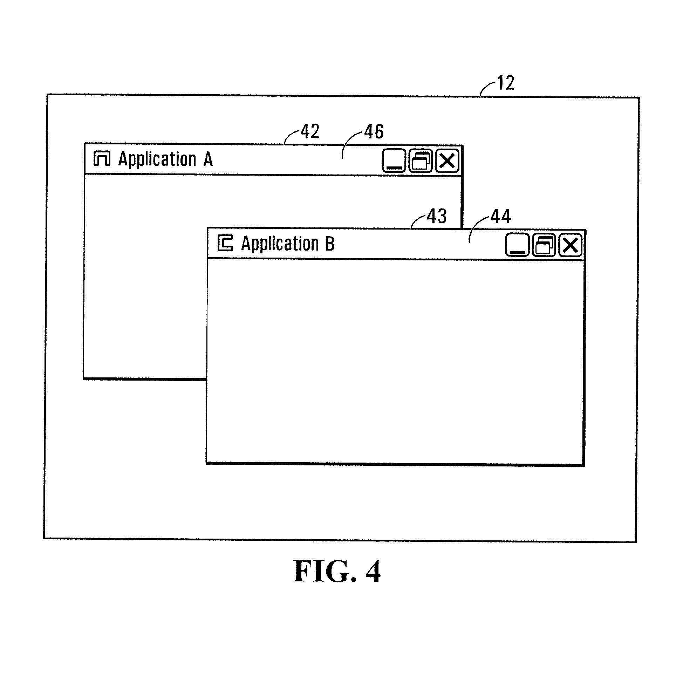

When a user is running multiple applications simultaneously, and/or using different aspects of any one application, multiple windows may be open on display **12.** **FIG. 4** shows two display windows, **42** and **44,** on display **12.** In particular, Application A executes in window **42** while Application B executes in window **44.** Title bar **46** identifies window **42** as belonging to Application A while title bar **43** identifies window **44** as belonging to Application B. As illustrated in **FIG. 4****,** part of window **42** is occluded by overlying window **44.** Moreover, although not illustrated, it may be appreciated that should window **44** overlie the title bar **46** of window **42,** this title bar would be occluded by window **44.** In such a case, the user would not be able to see the text on title bar **46.**

In overview, a method is provided whereby a user may easily identify and distinguish between display windows on a display. In addition to, or instead of, text and icons located in the title bar of a window, a pictograph representative of the window is rendered in the body of the window. The pictograph may be located in a corner of the window or may occupy a large percentage of the body area of the window. In this manner, even when a large area of an underlying window is occluded by an overlying window, at least some, if not all, of the pictograph may be visible to the user.

A pictograph may comprise alphanumeric characters or design graphics alone, or may be a combination of the two. Furthermore, the pictograph may be solid and therefore block out any underlying graphics or text in a window, or translucent (i.e., a watermark) therefore allowing underlying graphics or text in the window to be seen through the pictograph.

A pictograph may be representative of a relevant aspect of an application (where the application may run multiple windows), the application itself, or a portable device associated with the application. Indeed, each application or portable device may contain a graphics file with a pictograph representative of itself and where an application can run multiple different windows, the application may contain a graphics file for each aspect of the application which runs in a separate window. Alternatively, an application or portable device may contain a file or files with instructions, which when interpreted by computer **10,** causes computer **10** to render a pictograph representative of the application (or an aspect of the application) or portable device in a window. Upon connection of the portable device to computer **10,** or upon launching the application, computer **10** may query the application or portable device for the pictograph(s) or instruction file(s). Alternatively, upon connection with computer **10,** the application or portable device may push the pictograph(s) or instruction file(s) to computer **10.** Once in receipt of the pictograph or instruction file, computer **10** may render the pictograph in the window associated with the relevant aspect of the application (in the single application embodiment), the application (in the multiple application embodiment) or portable device.

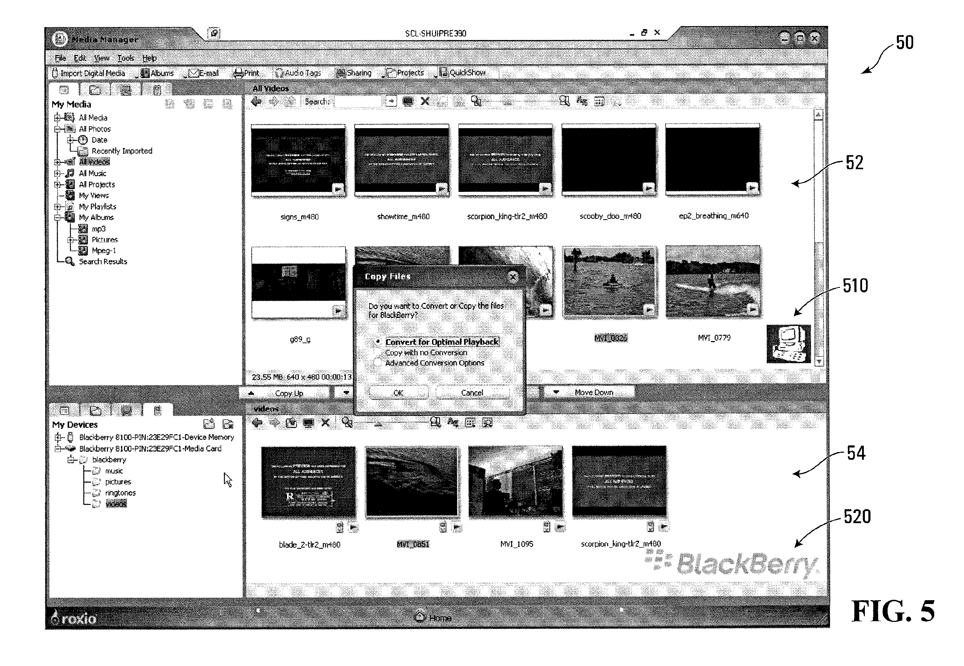

The foregoing is described in more detail below in conjunction with **FIGS. 5** to **8****.**

**FIG. 5** illustrates an example embodiment where pictographs, such as a watermark, are used to distinguish between different display windows of a single application. Specifically, the embodiment illustrated is in the context of a Media Manager application. The Media Manager application allows a user to drag and drop video files between a PC and a handheld communications device such as a BlackBerry^{™} device manufactured by Research in Motion Limited.

Specifically, the Media Manager program runs in a primary display window **50.** However, the Media Manager program also runs in two subwindows, **52** and **54.** Subwindow **52** shows files located in memory on the PC, as identified by pictograph **510** illustrating a PC, and subwindow **54** shows files located in memory on the BlackBerry^{™} device, as identified by pictograph **520** illustrating a BlackBerry^{™} logo. Pictographs **510** and **520** may, of course, comprise other graphics and/or alphanumeric text. Each pictograph uniquely identifies a relevant aspect of each subwindow - in this case, whether the window relates to the PC or the BlackBerry^{™}. It is optional, but not required, that the content of the pictograph **510** or **520** be conceptually related to the relevant aspect of the application so as to aid association by users between the pictograph **510** or **520** and the relevant aspect of the application.

It will be appreciated that the example embodiment illustrated in **FIG. 5** is not limited to a Media Manager program but may be used to distinguish between multiple windows of any application. For example, each window within an application could represent a different portable device or folder in memory. A pictograph representative of a portable device or folder may be rendered in the associated display window. The pictograph may also be the name of the portable device or folder or may be the path to the folder.

In general, a user may launch an application which comprises two or more display windows. Each display window may be associated with an aspect of the application. For example, each display window within an application may display files in different memory locations. The memory location may be a disk drive of a computing device (including subfolders on or partitions of the disk drive) or may be an external disk drive connectable to the computing device. An external disk drive may also be a component of a portable device such as a digital camera, PDA or music player. It will be appreciated, however, that display windows within an application could be associated with other aspects of the application.

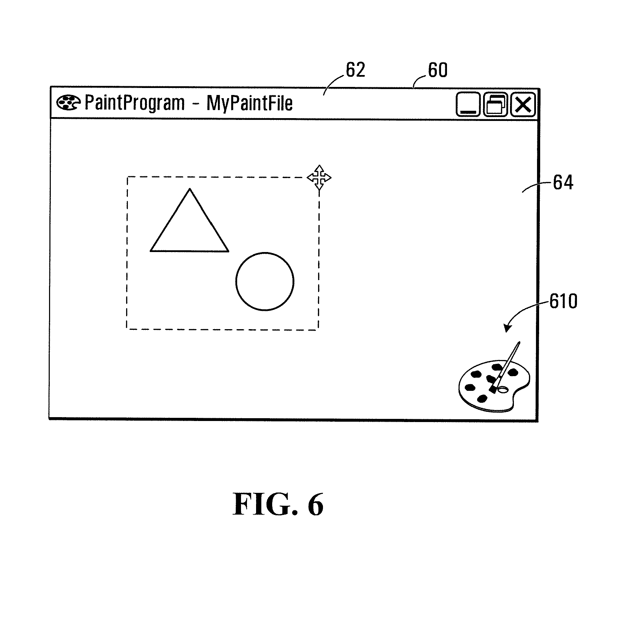

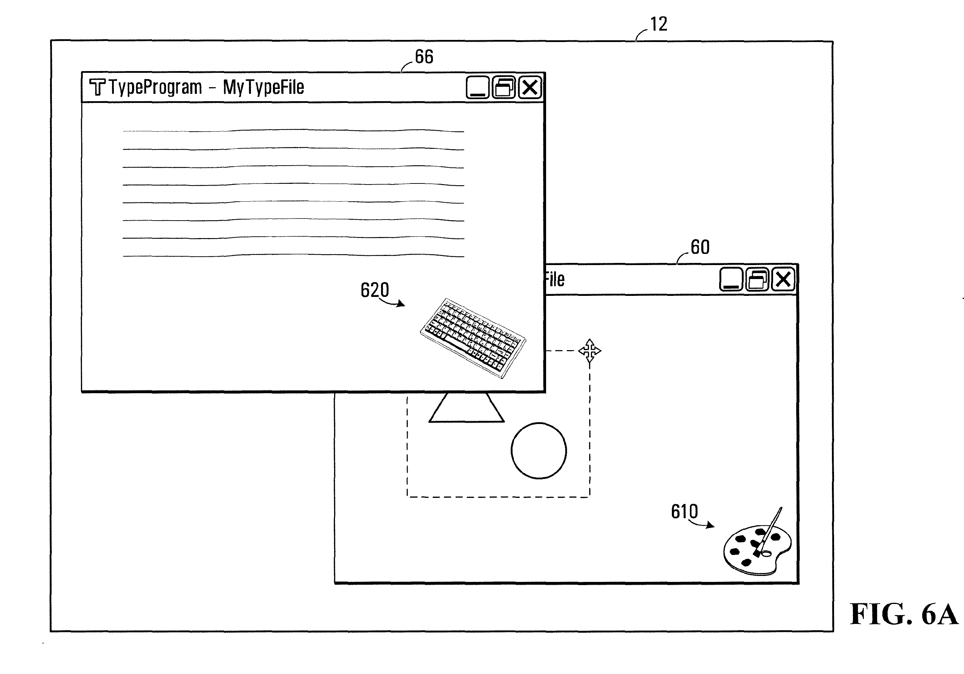

Reference is now made to **FIG. 6** which shows a screenshot of an example display window **60.** Like a conventional display window, display window **60** has a title bar **62** and a body **64.** Title bar **62** identifies window **60** as belonging to the PaintProgram application (a fictitious graphics application). However, unlike a conventional display window, a pictograph **610** associated with the PaintProgram application appears in the lower right corner of the body **64** of window **60.** Pictograph **610** comprises a paint palette and a paintbrush. Pictograph **610** may, of course, comprise other graphics and or alphanumeric text. It is optional, but not required, that a pictograph be conceptually related to its associated memory location so as to aid association by users between the pictograph and its associated application

**FIG. 6a** is a screenshot of display window **60** of **FIG. 6** sharing a display **12** with another display window **66.** Display window **66** is associated with the TypeProgram application (a fictitious word processing application). Pictograph **620,** a graphic of a keyboard, is associated with the TypeProgram application and is rendered in the body of window **66.** As illustrated, window **66** occludes the title bar of window **60** and thus prevents a user from viewing the text identifying window **60.** Conventionally, if a user is unsure of which display window **60** belongs to, he or she would have to move window **66** out of the way in order to view the title bar of window **60.** However, in accordance with the present embodiment, the user is able to quickly identify window **66** as belonging to the PaintProgram application despite the occlusion of its title bar because pictograph **610** remains visible.

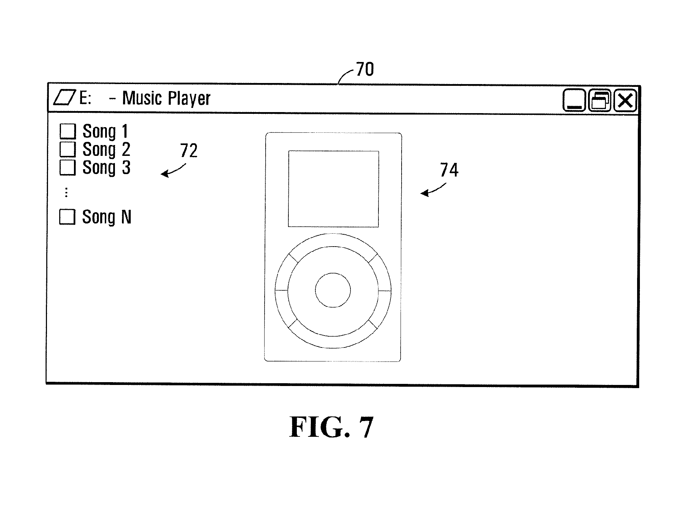

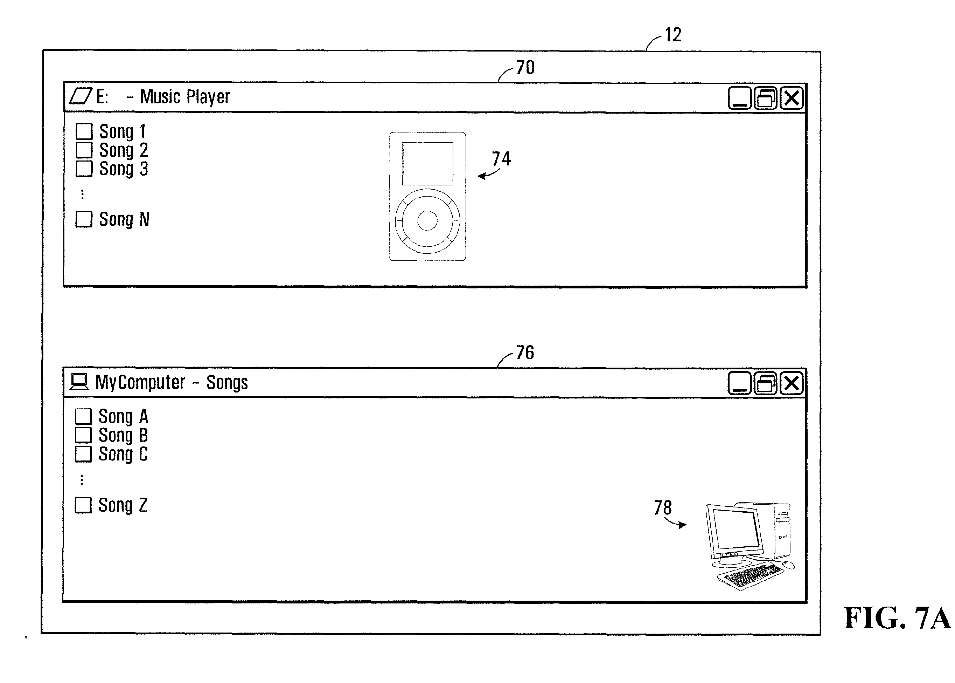

**FIG. 7** shows a window **70** associated with a device, in this example, a music player. Window **70** displays a list of files **72** stored on the music player. Pictograph **74** identifies window **70** as associated with the music player. Pictograph **74** is located in the middle of the body of window **70** and occupies a large percentage of the display area of window **70.** Pictograph **74** may be solid or may be translucent (i.e., a watermark).

**FIG. 7a** illustrates window **70** and another window **76** sharing the display **12.** Window **76** is associated with a PC (as identified by the pictograph **78** of a PC). Window **76** contains a listing of files stored on the PC. As illustrated, in the absence of pictographs **74** and **78,** windows **70** and **76** appear very similar. Therefore, a user who wishes to, for example, drag files from one window to another (to transfer files from the PC to the music player or vice versa), would have to read the text located in the title bar of each window in order to identify the window belonging to the music player (or PC). However, the addition of pictographs **74** and **78** facilitate such identification.

In general, a user may launch two applications, Application A and Application B. On launch, Application A may open in its own window and a pictograph representative of Application A may be rendered in the window. Similarly, Application B may open in its own window and a pictograph representative of Application B may be rendered in the window associated with Application B.

It may be advantageous to have a pictographic representation cover at least 5% of the display area of a body of a window so that there is a good likelihood it will be visible in various multi-window configurations. Indeed, especially where the pictograph is a watermark, it may be advantageous for the pictograph to cover at least 50% of the display area of the body of the window, again to provide a good likelihood the pictograph will be visible in various multi-window configurations. In addition, when the window is resized by the user, the pictograph may be automatically resized accordingly. For example, if the pictograph covers 50% of the display area of the body of the window, and a user resizes the window, the pictograph may resize automatically so that it covers 50% of the display area of the resized window.

Although not preferred, it may be possible to have the pictograph overlap with the title bar of a window, particularly where the pictograph is a watermark.

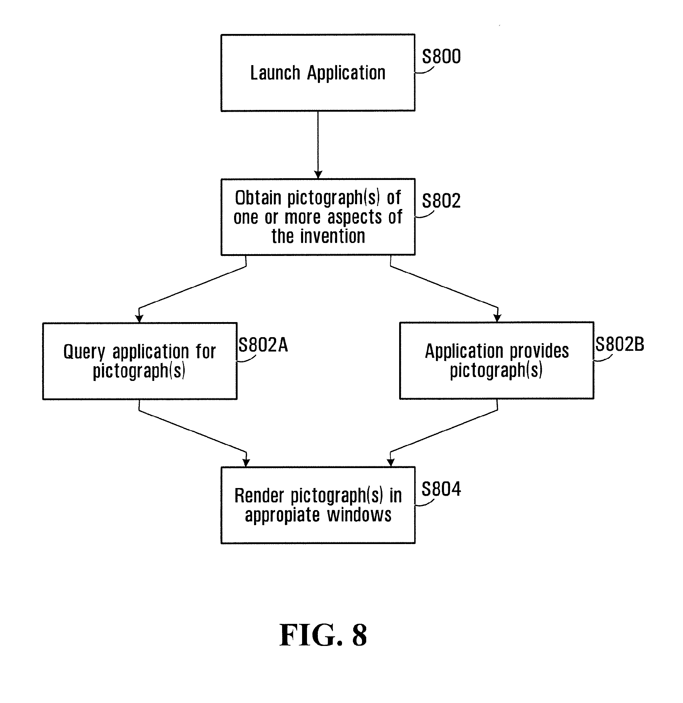

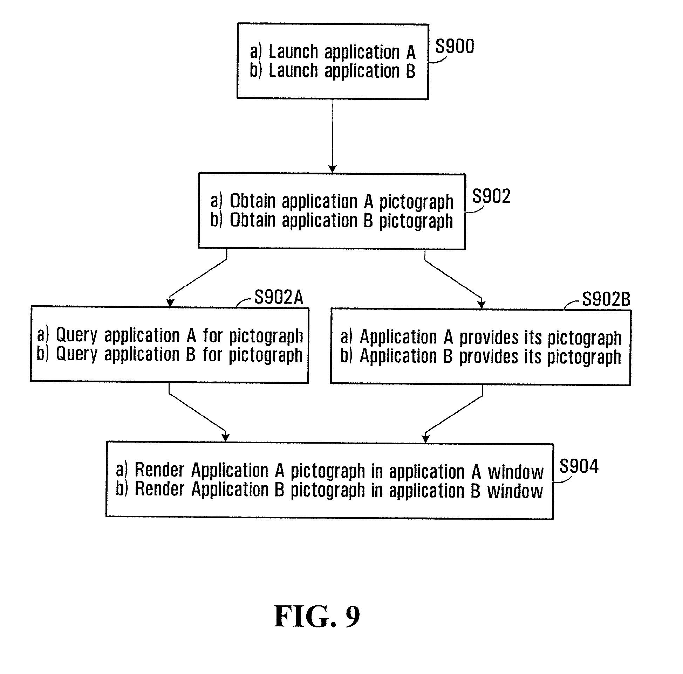

Suitable methods for achieving the foregoing are illustrated in **FIGS. 8** and **9****.**

More specifically, in a single application embodiment, upon launching an application **(****FIG. 8****, S800),** computer **10** may obtain pictograph files associated with one or more aspects of the application **(****FIG. 8****, S802)** and render each pictograph in the appropriate window. Computer **10** may obtain the pictographs by querying the application **(****FIG. 8****, S802a).** Alternatively, the application may provide (for example by pushing) the pictograph **(****FIG. 8****, S802b)** to computer **10** for rendering **(****FIG. 8****, S804).** In the latter case, instead of querying the application, computer **10** may receive the pictograph file from the application upon launch. Optionally, computer **10** may store the pictograph(s) associated with a relevant aspect(s) of the application the first time it receives the pictograph. Thereafter, computer **10** need not query the application and the application need not provide relevant pictographs to computer **10** each time the application is launched.

In a multiple application embodiment, Applications A and B may each contain a file defining its pictograph in for example .gif or .jpg formats. Upon launch **(****FIG. 9****, S900),** computer **10** may obtain the pictograph files from Applications A and B **(****FIG. 9**, **902**) and render each pictograph in the appropriate window. Computer **10** may obtain the pictographs by either querying the applications **(****FIG. 9****, S902a),** or alternatively, the applications may provide (for example by pushing) the pictographs **(****FIG. 9****, S902b)** to computer **10** for rendering upon launch **(****FIG. 9****, S904).** In the latter case, instead of querying the application, computer **10** may receive pictograph files from the applications upon launch. Optionally, computer **10** may store the pictograph associated with an application the first time it receives the application's pictograph. Thereafter, computer **10** need not query the application and the application need not provide its pictograph to computer **10** each time the application is launched.

In a further embodiment, an application may comprise instructions, which when interpreted by computer **10,** cause computer **10** to render a pictograph associated with aspects of the application or the application itself. More specifically, instead of the pictograph being encapsulated in for example a .gif or .jpg file, instructions for rendering the pictograph could be contained in a computer executable file. This type of implementation may be useful where, for example, a platform-specific pictograph is desired (e.g. the pictograph file could contain computer executable instructions to render the pictograph in different manners depending upon the target display).

The software application may be a device driver for driving a particular portable device. Alternatively, the software application associated with a device could be a standalone program, such as a Media Manager, for managing media files on different types of portable devices (e.g. **FIG. 5****)** or it could be a software application already resident on computer **10** (e.g. as included with the operating system running on computer **10).** The pictograph associated with a portable device could be, for example, a representation of the portable device.

Although reference has been made to software applications running on a PC, it may be appreciated that the software applications could run on other computing devices with a suitable display and therefore the teachings herein may be applied to other types of computing devices.

Other modifications will be apparent to those skilled in the art.

### COPYRIGHT NOTICE

A portion of the disclosure of this patent document contains material which is subject to copyright protection. The copyright owner has no objection to the facsimile reproduction by any one of the patent document or patent disclosure, as it appears in a Patent Office patent file or records, but otherwise reserves all copyright rights whatsoever.

## Claims

1. A method for facilitating handling of multiple display windows running on a computing device, comprising:
presenting a first window on a display for said computing device, said first window having a title bar and a body, said first window displaying at least one of alphanumerics and graphics;
presenting a second window on said display, said second window having a title bar and a body, said second window displaying at least one of alphanumerics and graphics;
rendering a first pictograph representative of said first window in said body of said first window; and
rendering a second pictograph representative of said second window in said body of said second window, said second pictograph being visually different from said first pictograph.

2. The method of claim 1 wherein said presenting a first window on a display comprises launching a first software application which runs said first window and wherein presenting a second window on said display comprises launching a second software application which runs said second window.

3. The method of claim 2 wherein said first software application is a device driver and said presenting said first window comprises presenting said first window displaying at least one of alphanumerics and graphics associated with a device driven by said device driver.

4. The method of claim 1 or claim 2, further comprising:
obtaining a first pictograph representative of said first window; and
obtaining a second pictograph representative of said second window, said second pictograph being visually different from said first pictograph.

5. The method of any one of claim 1 to claim 4 wherein said rendering said first pictograph representative of said first window on said first window comprises rendering a watermark in said first window which is visible through any overlying alphanumerics and graphics in said first window.

6. The method of claim 5 wherein said rendering said first pictograph representative of said first window in said first window comprises rendering said watermark so as to occupy at least 5% of said first window.

7. The method of claim 5 wherein said rendering said first pictograph representative of said first window on said first window comprises rendering said watermark in said first window so as to occupy at least 50% of said first window.

8. The method of any one of claims 4 to 7 wherein said obtaining a first pictograph representative of said first window comprises querying a software application running in said first window for a pictographic watermark.

9. The method of claim 4 when dependent on claim 2 wherein said obtaining a first pictograph representative of said first window comprises receiving said first pictograph from said first software application.

10. The method of claim 4 when dependent on claim 2 further comprising constructing said first pictograph based on information received from said first software application.

11. The method of claim 3 wherein said device driver drives a memory device and further comprising displaying on said first window at least one alphanumeric or graphic representative of a file on said memory device.

12. A computing device facilitating handling of multiple display windows, comprising:
a display;
a processor operable to undertake the method of any one of claims 1 to 11.

13. A computer readable medium storing computer readable instructions which, when executed by a processor of a computing device, cause said computing device to perform the steps of the method of any one of claims 1 to 11.

## Amended claims

### Amended claims in accordance with Rule 137(2) EPC.

**1.** A method for facilitating handling of multiple display windows running on a computing device (10), comprising:
presenting a first window (52) on a display (12) for said computing device (10), said first window (52) having a title bar and a body, said first window (52) displaying at least one of alphanumerics and graphics;
presenting a second window (54) on said display, said second window (54) having a title bar and a body, said second window (54) displaying at least one of alphanumerics and graphics;
rendering a first pictograph (510) in said body of said first window (52); and
rendering a second pictograph (520) in said body of said second window (54), said second pictograph (520) being visually different from said first pictograph (510), wherein a software application runs both of said first window (52) and said second window (54), and said first pictograph (510) is representative of a first aspect of said software application and said second pictograph (520) is representative of a second aspect of said software application.

**2.** The method of claim 1 wherein said software application is a storage media manager and said first aspect of said software application relates to a first storage device managed by said media manager, and said second aspect of said software application relates to a second storage device managed by said media manager.

**3.** The method of claim 1, further comprising:
obtaining said first pictograph (510) prior to said rendering said first pictograph (510); and
obtaining said second pictograph (520) prior to said rendering said second pictograph (520).

**4.** The method of any one of claims 1 to 3 wherein said rendering said first pictograph (510) comprises rendering a watermark in said first window (52) which is visible through any overlying alphanumerics and graphics in said first window (52).

**5.** The method of claim 4 wherein said rendering said first pictograph (512) comprises rendering said watermark so as to occupy at least 5% of said first window (52).

**6.** The method of claim 4 wherein said rendering said first pictograph (512) comprises rendering said watermark in said first window (52) so as to occupy at least 50% of said first window (52).

**7.** The method of any one of claims 3 to 6 wherein said obtaining said first pictograph (512) comprises querying said software application for a pictographic watermark.

**8.** The method of claim 3 wherein said obtaining said first pictograph (512) comprises receiving said first pictograph (512) from said software application.

**9.** The method of claim 3 further comprising constructing said first pictograph (512) based on information received from said software application.

**10.** The method of claim 2 wherein said media manager manages a memory device and further comprising displaying on said first window (52) at least one alphanumeric or graphic representative of a file on said memory device.

**11.** A computing device (10) facilitating handling of multiple display windows (52, 54), comprising:
a display (12);
a processor operable to undertake the method of any one of claims 1 to 10.

**12.** A computer readable medium storing computer readable instructions which, when executed by a processor of a computing device (10), cause said computing device (10) to perform the steps of the method of any one of claims 1 to 10.
